Europäisches Patentamt

European Patent Office

Office européen des brevets

(19)

(11) Numéro de publication: **0 230 901**
**B1**

(12) **FASCICULE DE BREVET EUROPEEN**

(45) Date de publication du fascicule du brevet:
08.08.90

(21) Numéro de dépôt: **87100342.2**

(22) Date de dépôt: **13.01.87**

(51) Int. Cl.⁵: **H01M 6/50**, H01M 2/40,
H01M 6/30, H01M 6/14

(54) **Dispositif échangeur thermique pour pile amorcable.**

(30) Priorité: **16.01.86 FR 8600565**

(43) Date de publication de la demande:
**05.08.87 Bulletin 87/32**

(45) Mention de la délivrance du brevet:
**08.08.90 Bulletin 90/32**

(84) Etats contractants désignés:
**DE FR GB IT SE**

(56) Documents cités:
**FR-A- 2 300 426**
**US-A- 3 507 704**
**US-A- 4 200 684**
**US-A- 4 202 772**

**PATENT ABSTRACTS of JAPAN,**
**vol. 6, no. 189 (E-133)[1067], 28 septembre 1982; &**
**JP-A-57 103 271 (YUASA DENCHI K.K.) 26-06-1982**

(73) Titulaire: **Société Anonyme dite SAFT, 156, avenue de Metz, F-93230 Romainville(FR)**

(72) Inventeur: **Descroix, Jean-Pierre, 16 bis, rue de Neuilly, F-94120 Fontenay sous Bois(FR)**
Inventeur: **Leben, Yannick, 10, rue Albert Laurenson, F-93000 Bobigny(FR)**

(74) Mandataire: **Weinmiller, Jürgen et al, Lennéstrasse 9 Postfach 24, D-8133 Feldafing(DE)**

## Description

La présente invention concerne un dispositif échangeur thermique pour pile amorçable.

Elle concerne tout particulièrement des piles à forte puissance massique. De telles piles, mettant en œuvre par exemple le couple Li-SOCl$_2$ ou le couple Li-SO$_2$Cl$_2$ peuvent délivrer des puissances de plusieurs centaines de kwatts et dégagent sous forme de chaleur entre l'équivalent de 10 à 20% de l'énergie délivrée. Si le refroidissement de la pile n'est pas assuré, il peut en résulter une fusion du lithium, et une auto-destruction de la pile, bien avant qu'elle ne soit complètement déchargée.

Il est donc impératif de collecter les calories dégagées par la réaction électrochimique et de les évacuer tout d'abord à l'extérieur du bloc électrochimique, puis à l'extérieur de l'enceinte qui le contient.

Le brevet US-A 4 200 684 propose une solution pour des piles à électrodes épaisses présentant des capacités de 100 à 10 000 Ah. Dans ces piles les électrodes sont maintenues écartées entre elles par des entretoises; l'électrolyte circule dans des tubes métalliques situés au sein des anodes et dans des tubes métalliques perforés situés au sein des cathodes, puis il est recyclé. L'échange thermique s'effectue dans la masse même de l'électrolyte en circulation.

Compte tenu de cette fonction thermique de l'électrolyte, le rapport entre la quantité d'électrolyte actif du point de vue électrochimique et la quantité totale d'électrolyte présent dans la pile est relativement faible. Il en résulte une énergie massique faible pour la pile.

Le problème d'évacuation de chaleur est difficile à résoudre dans les piles Li-SOCl$_2$ ou Li-SO$_2$Cl$_2$ comportant un empilage de Volta dont chaque élément est constitué de composants très minces, avec une distance inter-électrodes faible; à titre d'exemple chaque élément comporte:

– une cathode poreuse dont l'épaisseur est de l'ordre de quelques dixièmes de mm,
– un séparateur dont l'épaisseur est de l'ordre du dixième de mm,
– une anode de lithium dont l'épaisseur est de l'ordre du dixième de mm,
– un collecteur de cuivre nickelé dont l'épaisseur est de l'ordre de quelques centièmes de mm.

Le collecteur de cuivre peut servir à la conduction des calories, mais on ne peut accroître son épaisseur à cause de l'accroissement de poids que cela entraînerait.

Par ailleurs, on ne peut écarter davantage les électrodes, un intervalle plus important entraînant une chute des performances de la pile.

La présente invention a pour but de réaliser une structure permettant malgré tout l'évacuation efficace des calories.

La présente invention a pour objet un dispositif échangeur thermique pour pile amorçable comportant un empilage de Volta enfermé dans une enveloppe isolante, chaque élément de l'empilage comprenant une cathode poreuse, un séparateur, une anode et un collecteur métallique ; il est caractérisé par le fait qu'il comporte un circuit de circulation forcé d'électrolyte comprenant :

- des puits d'injection d'électrolyte et des puits collecteurs d'électrolyte,
- des moyens pour assurer le transfert de l'électrolyte des puits d'injection jusqu'aux puits collecteurs à travers chaque élément, lesdits moyens comprenant des canaux creusés dans au moins une électrode de cet élément,
- une pompe assurant la circulation de l'électrolyte à partir des puits d'injection jusqu'aux puits collecteurs débouchant à l'extérieur de ladite enveloppe isolante.

Dans le cas où les anodes sont en lithium, lesdits canaux sont de préférence ménagés dans les cathodes des éléments.

La surface desdits canaux est avantageusement comprise entre 5% et 20% de la surface des électrodes.

Selon un premier mode de réalisation, lesdits puits d'injection et lesdits puits collecteurs sont définis par l'empilement d'un ensemble de rondelles centrales coaxiales comportant une pluralité d'orifices.

Ces rondelles comportent des rainures assurant le transfert de l'électrolyte dans lesdits canaux; par ailleurs un élément sur deux comporte un canal périphérique communiquant d'une part avec ses propres canaux et d'autre part, par l'intermédiaire d'orifices, avec les canaux de l'élément adjacent.

Selon un second mode de réalisation, les puits d'injection sont définis par l'empilement d'un ensemble de rondelles centrales coaxiales comportant une pluralité d'orifices, tandis que les puits collecteurs sont définis par l'empilement d'un ensemble de rondelles périphériques coaxiales comportant une pluralité d'orifices.

Les rondelles centrales comportent des rainures faisant communiquer leurs orifices d'injection avec les canaux ménagés dans les électrodes ; les rondelles périphériques présentent des canaux de raccordement périphériques pour faire communiquer leurs orifices avec les canaux ménagés dans lesdites électrodes.

De préférence, les canaux radiaux ménagés dans l'électrode d'un couple sont décalés angulairement par rapport aux canaux radiaux ménagés dans l'électrode du couple précédent et à ceux de l'électrode du couple suivant.

D'autres caractéristiques et avantages de la présente invention apparaîtront au cours de la description suivante de modes de réalisation donnés à titre illustratif mais nullement limitatif. Dans le dessin annexé :

- la figure 1 est une vue très schématique semi-coupée d'une pile associée à son dispositif de circulation d'électrolyte selon l'invention,
- la figure 2 est un schéma hydraulique d'alimentation en électrolyte de la pile de la figure 1,

- la figure 3 montre en demi-coupe schématique un élément de la pile de la figure 1 avec sa rondelle centrale,

- la figure 4 est une vue de dessus d'une électrode bipolaire selon l'invention avec sa rondelle centrale,

- la figure 5 est une vue de dessus d'une électrode bipolaire associée à celle de la figure 4,

- la figure 6 est une vue analogue à la figure 4 pour une variante d'électrode bipolaire,

- la figure 7 est une vue analogue à la figure 5 pour une électrode bipolaire associée à celle de la figure 6,

- la figure 8 est une variante de schéma hydraulique d'alimentation en électrolyte de la pile de la figure 1,

- la figure 9 est une vue de dessus d'une variante d'électrode bipolaire selon l'invention avec sa rondelle centrale et sa rondelle périphérique,

- la figure 10 est une vue de dessus d'une électrode bipolaire associée à celle de la figure 9.

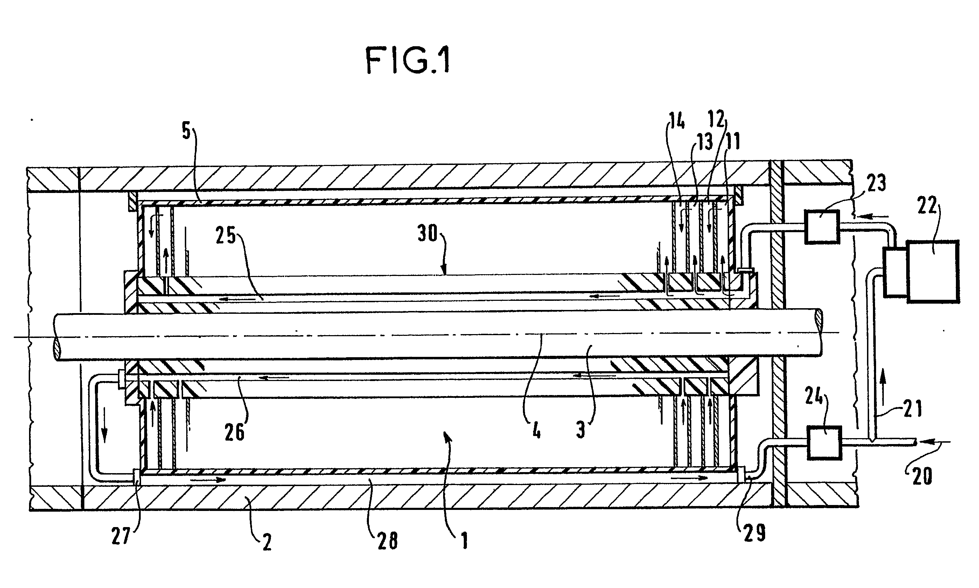

La figure 1 montre très schématiquement une pile et son dispositif de circulation d'électrolyte.

La pile 1 selon l'invention est logée dans la coque échangeuse 2. Elle est formée d'un empilage d'éléments électrochimique 11, 12, 13, 14... dont la structure sera décrite en détail plus loin. L'ensemble de l'empilage est percé d'une cheminée centrale 3 d'axe 4 et enrobé d'une enveloppe isolante 5.

L'électrolyte est stocké dans un réservoir qui ne fait pas partie de l'invention. Au moment de l'amorçage, il arrive au niveau de la flèche 20 dans la canalisation 21 et il est mis en circulation dans la pile 1 grâce à une pompe 22 ; 23 et 24 sont des références pour des vannes. Comme on le verra en détail plus loin, diverses canalisations sont ménagées dans un bloc central 30 d'axe 4. L'électrolyte passe par le puits d'injection 25, puis dans les éléments impairs 11, 13...etc, puis dans les éléments pairs (de 11 à 12, de 13 à 14 etc...), et des éléments pairs au puits collecteur 26. Le puits collecteur communique au niveau d'une entrée 27 avec une chambre annulaire périphérique 28 comprise entre la coque 2 et l'enveloppe isolante 5. La sortie 29 de cette chambre communique avec la canalisation 21 d'entrée de la pompe.

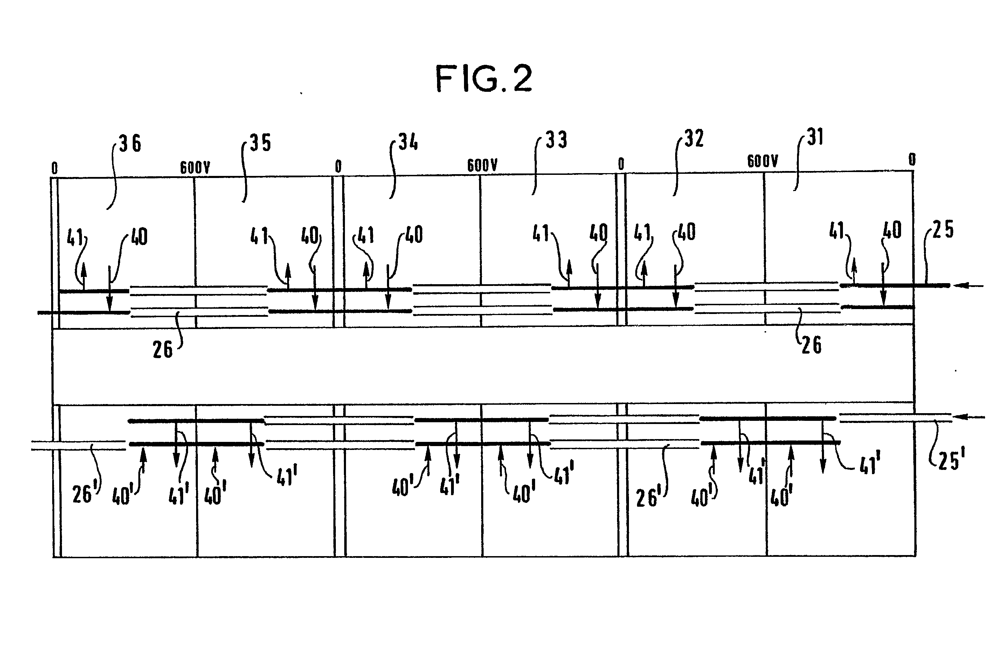

La figure 2 donne un schéma hydraulique d'alimentation en électrolyte d'une pile selon l'invention comportant six blocs d'éléments 31 à 36 de 600 volts, connectés en parallèle. Dans ce schéma apparaissent deux puits d'injection d'électrolyte 25 et 25' et deux puits collecteurs 26 et 26'. Les flèches 41 et 41' correspondent à l'introduction de l'électrolyte dans les éléments impairs des blocs à partir des puits d'injection et les flèches 40 et 40' correspondent à l'évacuation des éléments pairs vers les puits collecteurs.

Plusieurs autres puits d'injection et d'évacuation peuvent être prévus dans le bloc 30 dont on va donner la structure ci-après.

Le bloc 30 est constitué d'une superposition de rondelles isolantes 50 présentant une hauteur égale à celle d'un élément. Chaque rondelle présente un trou central définissant la cheminée 3 d'axe 4.

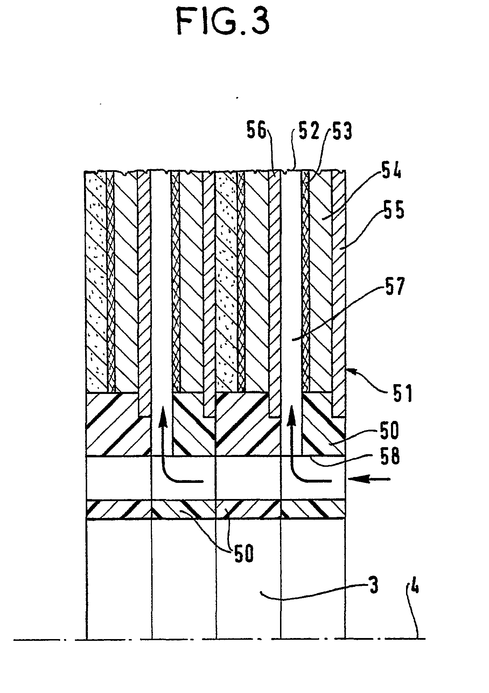

On voit dans la figure 3 une demi-coupe schématique d'une rondelle 50 associée à un élément 51. Ce dernier comporte :

- une cathode poreuse 52, d'épaisseur 0,4 mm
- un séparateur 53, d'épaisseur 0,1 mm
- une anode de lithium 54, d'épaisseur 0,15 mm
- un collecteur de cuivre nickelé 55, d'épaisseur 0,025 mm.

Pour la clarté du dessin, l'échelle n'est pas respectée.

L'anode 54, le collecteur 55 et la cathode de l'élément adjacent constituent une électrode bipolaire.

La circulation de l'électrolyte peut se faire grâce à la présence d'un puits d'injection d'électrolyte et d'une rainure 58 orthogonale communiquant avec un canal radial 57 ménagé dans la cathode 52.

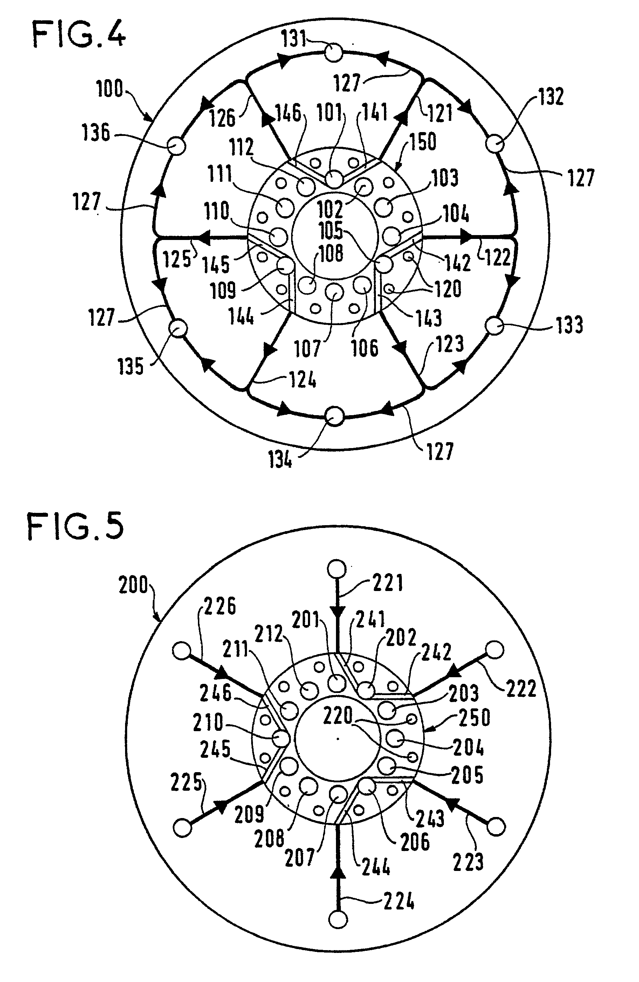

Le mécanisme de la circulation sera mieux compris au vue des figures 4 et 5 montrant respectivement en vue de dessus la face cathodique 100 d'une électrode bipolaire et la face cathodique 200 de l'électrode bipolaire qui se trouve juste au-dessous de l'électrode bipolaire précédente.

La cathode 100 et associée à une rondelle 150 présentant douze orifices 101 à 112 régulièrement répartis et susceptibles d'appartenir à un puits d'injection ou à un puits collecteur. Pour des raisons de commodité toutes les rondelles de l'empilage possèdent les mêmes orifices (voir la rondelle 250 de la cathode 200 de la figure 5 et ses douze orifices 201 à 212). Par ailleurs, les rondelles 100, 200 possèdent des orifices 120, 220 pour le passage des connexions électriques.

La cathode 100 comporte dans sa masse des canaux radiaux 121 à 126 et un canal périphérique 127 communiquant avec des orifices 131 à 136 traversant toute l'électrode bipolaire. Ces orifices aboutissent respectivement dans des canaux radiaux 221 à 226 ménagés dans la cathode 200 et décalés angulairement par rapport aux canaux 121 à 126.

Enfin, la rondelle 150 présente des rainures 141 et 146 mettant en communication l'orifice 101 respectivement avec les canaux 121 et 126; il en est de même pour les rainures 142 et 143 situées entre l'orifice 105 et les canaux 122 et 123, ainsi que pour les rainures 144 et 145 situées entre l'orifice 109 et les canaux 124 et 125.

Pour la rondelle 250 de la cathode 200, les rainures 241 et 242 mettent en communication l'orifice 202 avec les canaux 221 et 222; de même les rainures 243 et 244 mettent en communication l'orifice 206 avec les canaux 223 et 224 et les rainures 245 et 246 mettent en communication l'orifice 210 avec les canaux 225 et 226.

Si l'on imagine la superposition des deux électrodes bipolaires des figures 4 et 5, on voit que l'électrolyte issu des orifices 101, 105 et 109 se répartit (voir le trajet fléché) vers la périphérie de l'élément, par l'intermédiaire des rainures 141 à 146, dans les canaux radiaux 121 à 126 vers le canal périphérique 127 ; puis l'électrolyte passant par les orifices 131 à 136 circule vers le centre de l'élément dans les canaux 221 à 226 jusqu'aux rainures 241 à 246 dans les orifices 202, 206 et 210 appartenant à un puits collecteur.

A titre d'exemple :

- le diamètre intérieur des électrodes bipolaires est de 200 mm,
- le diamètre extérieur des électrodes bipolaires est de 485 mm,
  - la hauteur d'une rondelle est de 0,7 mm environ,
  - les canaux ont une profondeur de 0,4 mm,
  - la largeur des canaux radiaux est de 6 mm,
  - la largeur du canal périphérique est de 3 mm,
  - la cheminée centrale a un diamètre de 100 mm.

La surface des canaux est avantageusement comprise entre 5% et 20% de la surface des couples.

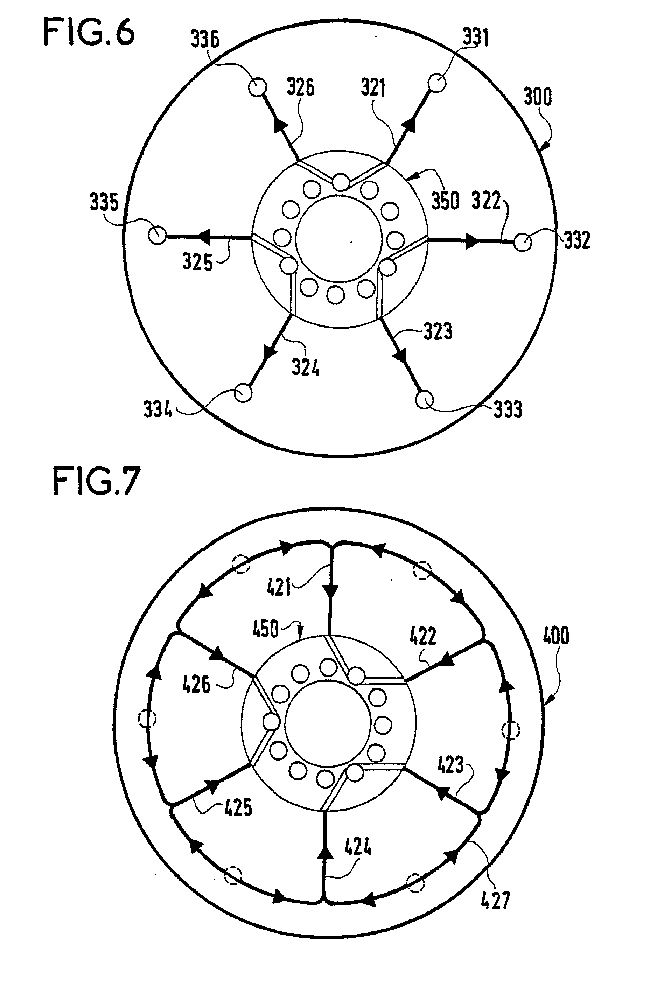

Les figures 6 et 7 montrent des variantes d'électrodes bipolaires selon l'invention.

La figure 6, analogue à la figure 4, montre en vue de dessus la face cathodique 300 d'une électrode bipolaire, et la figure 7, analogue à la figure 5, montre en vue de dessus la face cathodique 400 de l'électrode bipolaire située juste au-dessous de la précédente.

La cathode 300, munie d'une rondelle 350 analogue à la rondelle 150, comporte des canaux radiaux 321 à 326 aboutissant dans des orifices 331 à 336, mais pas de canal périphérique.

On a indiqué par des flèches le circuit centrifuge de l'électrolyte issu des orifices de la rondelle 350. La cathode 400, munie d'une rondelle 450 analogue à la rondelle 250, comporte des canaux radiaux 421 à 426, aboutissant dans un canal périphérique 427 communiquant avec les orifices 331 à 336 de l'électrode bipolaire de la figure 6.

On a indiqué le trajet fléché centripète de l'électrolyte à partir du canal périphérique 427 vers les orifices de la rondelle 450.

Dans les modes de réalisation des figures 4 à 7, il est avantageux de prévoir des petites rondelles isolantes autour des orifices de communication entre les couples (131 à 136 par exemple) afin de limiter les courants de fuite.

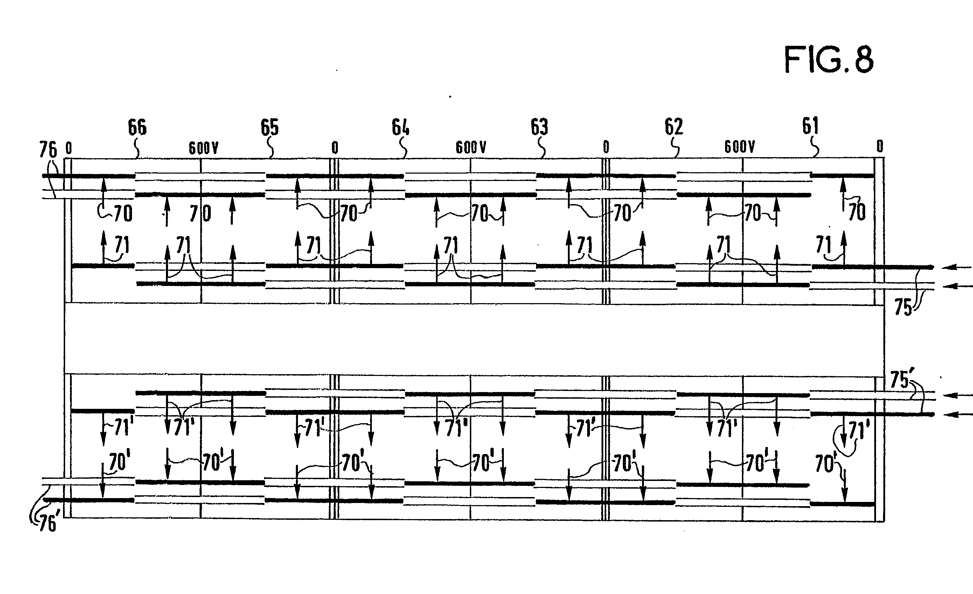

La figure 8 donne une variante du schéma hydraulique d'alimentation d'une pile comportant six blocs 61 à 66 de 600 volts connectés en parallèle. On retrouve deux puits d'injection d'électrolyte 75 et 75′ disposés en position centrale et deux puits collecteurs 76 et 76′ disposés en position périphérique. Les flèches 71 et 71′ correspondent à l'introduction de l'électrolyte dans les éléments des blocs à partir des puits d'injection, et les flèches 70 et 70′ correspondent à l'évacuation des éléments vers les puits collecteurs. Bien entendu d'autres puits d'injection et d'autres puits collecteurs peuvent compléter ce schéma.

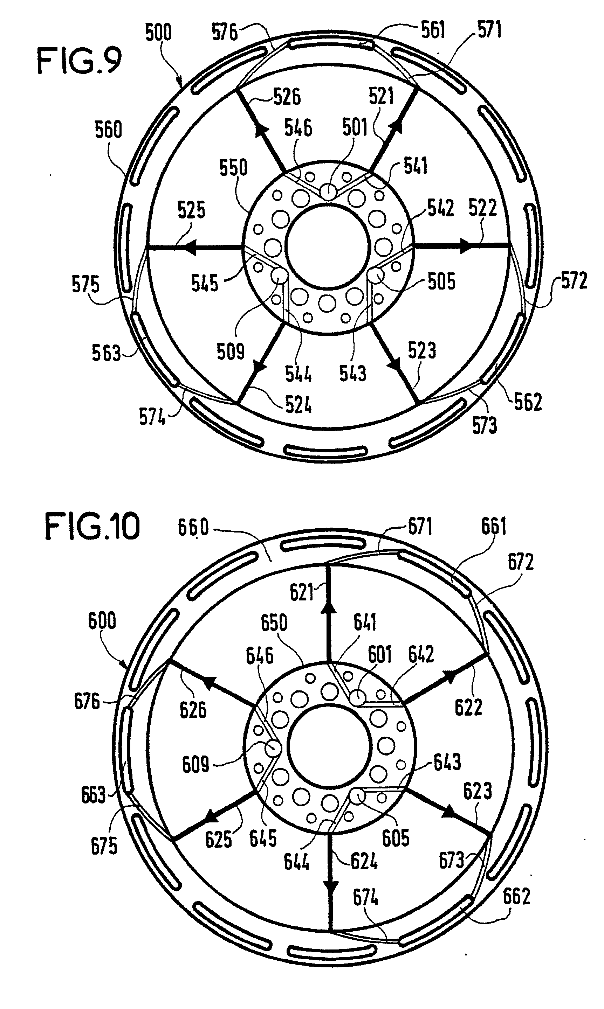

Les figures 9 et 10 montrent des variantes de rondelles centrales associées à des rondelles périphériques et permettant de mettre en oeuvre le schéma hydraulique qui vient d'être décrit.

La figure 9 est analogue à la figure 4 et montre le dessus de la face cathodique 500 d'une électrode bipolaire selon l'invention, et la figure 10 est la vue de dessus de la face cathodique 600 de l'électrode bipolaire qui se trouve juste au dessous de la précédente.

On voit dans la figure 9 une rondelle centrale 550 et une rondelle périphérique 560 coaxiales. La rondelle 550 présente douze orifices susceptibles d'appartenir à un puits d'injection d'électrolyte ; on en a référencé trois, 501, 505, 509 situés aux sommets d'un triangle équilatéral et communiquant par des rainures 541 à 546 avec des canaux radiaux ménagés dans la surface de la cathode 500, référencés 521 à 526.

Par ailleurs la rondelle périphérique 560 est munie de douze orifices susceptibles d'appartenir à un puits collecteur d'électrolyte ; on en a référencé trois, 561, 562, 563, communiquant par des canaux de raccordement périphériques 571 à 576 respectivement avec les canaux radiaux 521 à 526.

Dans la figure 10 on a une disposition analogue à celle de la figure 9, mais avec un décalage angulaire. On retrouve la rondelle centrale 650 et la rondelle périphérique 660. Les orifices 601, 605 et 609 de la rondelle centrale 650 font partie de puits d'injection d'électrolyte, tandis que les orifices 661, 662 et 663 de la rondelle 660 communiquent avec les puits collecteurs. Les canaux radiaux 621 à 626 de la cathode 600 communiquent d'une part avec les rainures 641 à 646 de la rondelle centrale 650 et d'autre part avec les canaux périphériques de raccordement 671 à 676 de la rondelle 660.

Grâce à toutes les dispositions qui viennent d'être décrites, la conduction radiale de la chaleur est assurée par les feuilles métalliques (lithium et collecteurs métalliques) et le transfert des calories hors de la pile est réalisé grâce à la circulation de l'électrolyte dans tous les couples jusqu'aux puits collecteurs d'électrolyte. Les canaux creusés directement dans les électrodes permettent en effet un contact direct entre la surface du métal et l'électrolyte.

L'arrangement selon l'invention permet d'obtenir pour tous les couples, quelle que soit leur position dans l'empilage une perte de charge et un débit d'électrolyte très voisins.

Par ailleurs, l'électrolyte est acheminé entre l'enveloppe isolante de la pile et la coque échangeuse qui assure l'évacuation des calories vers l'extérieur.

Bien entendu l'invention n'est pas limitée aux modes de réalisation décrits, où l'on a prévu six canaux radiaux dans chaque cathode ; il est possible de n'en prévoir que quatre, ou d'en prévoir davantage.

Les collecteurs de cuivre peuvent être remplacés par des collecteurs en aluminium nickelé, dont l'épaisseur est de l'ordre de 25 à 100 µm.

Selon un autre mode de réalisation les canaux radiaux et périphériques peuvent être prévus dans les anodes de lithium. Il paraît cependant préférable qu'ils soient ménagés dans les cathodes, plus épaisses et qui ont tendance à gonfler au cours de la décharge, tandis que l'épaisseur des anodes décroît.

## Revendications

1. Dispositif échangeur thermique pour pile amorçable comportant un empilage de Volta enfermé dans une enveloppe isolante, chaque élément de lithium et un collecteur métallique, qui sont des composants plats superposés les uns contre les autres présentant chacun une épaisseur de l'ordre de quelques dixièmes de millimètres ou moins, caractérisé par le fait qu'il comporte un circuit de circulation forcée d'électrolyte comprenant:
   - des puits d'injection d'électrolyte (25) et des puits collecteurs d'électrolyte (26),
   - des moyens pour assurer le transfert de l'électrolyte des puits d'injection jusqu'aux collecteurs à travers chaque élément (11, 12, 13, 14), comportant des canaux creusés dans la masse même d'au moins une électrode de cet élément,
   - une pompe (22) assurant la circulation de l'électrolyte le long desdits canaux à partir des puits d'injection jusqu'aux puits collecteurs débouchant à l'extérieur de ladite enveloppe isolante (5).

2/ Dispositif selon la revendication 1, caractérisé par le fait que lesdits canaux (121 à 126, 221 à 226) sont ménagés dans les cathodes (100, 200) des éléments.

3/ Dispositif selon l'une des revendications précédentes, caractérisé par le fait que la surface desdits canaux est comprise entre 5% et 20% de la surface des électrodes.

4/ Dispositif selon l'une des revendications précédentes, caractérisé par le fait que lesdits puits d'injection et lesdits puits collecteurs sont définis par l'empilement d'un ensemble de rondelles centrales coaxiales (150, 250) comportant une pluralité d'orifices.

5/ Dispositif selon la revendication 4, caractérisé par le fait que lesdits moyens pour assurer le transfert de l'électrolyte comportent d'une part des rainures (141 à 146, 241 à 246) ménagées dans chaque rondelle et communiquant avec lesdits canaux, et d'autre part un canal périphérique (127) prévu avec un élément sur deux, communiquant d'une part directement avec ses propres canaux et d'autre part avec les canaux de l'élément adjacent par l'intermédiaire d'orifices (131 à 136).

6/ Dispositif selon l'une des revendications 1 à 3, caractérisé par le fait que lesdits puits d'injection sont définis par l'empilement d'un ensemble de rondelles centrales coaxiales (550) comportant une pluralité d'orifices (501, 509) et que lesdits puits collecteurs sont définis par l'empilement d'un ensemble de rondelles périphériques (560) coaxiales comportant une pluralité d'orifices (561, 563).

7/ Dispositif selon la revendication 6, caractérisé par le fait que lesdites rondelles centrales présentent des rainures (541 à 546) faisant communiquer leurs orifices d'injection avec les canaux (521, 526) ménagés dans lesdites électrodes (500).

8/ Dispositif selon l'une des revendications 6 et 7, caractérisé par le fait que lesdites rondelles périphériques (560) présentent des canaux de raccordement périphériques (571 à 576) pour faire communiquer leurs orifices avec les canaux ménagés dans lesdites électrodes (500).

9/ Dispositif selon l'une des revendications précédentes, caractérisé par le fait que les canaux ménagés dans l'électrode d'un couple étant radiaux, ils se trouvent décalés angulairement par rapport aux canaux de l'électrode du couple précédent et à ceux de l'électrode du couple suivant.

## Claims

1. A heat exchanger arrangement for an activatable battery including a Volta pile enclosed in an insulating envelope, each cell of the pile comprising a porous cathode, a separator, a lithium anode, and a metal collector, all of which are flat components superposed one upon another and having a thickness of about some tenths of millimeters or less, said heat exchanger being characterized in that it comprises a circuit for forced circulation of the electrolyte and including:
   - electrolyte injection manifolds (25) and electrolyte collection manifolds (26),
   - means for transferring electrolyte from the injection manifold to the collector manifold through each cell (11, 12, 13, 14), said means including channels formed inside at least one electrode of each cell; and
   - a pump (22) for causing the electrolyte to circulate along said channels from the injection manifold to the collector manifold which open out of said insulating envelope (5).

2. A device according to claim 1, characterized in that said channels (121 to 126, 221 to 226) are provided in the cathodes (100, 200) of the cells.

3. An arrangement according to anyone of the preceding claims, characterized in that the surface of said channels is comprised between 5% and 20% of the surface of the electrodes.

4. An arrangement according to anyone of the preceding claims, characterized in that said injection manifolds and said collector manifolds are defined by stacking together a set of central coaxial washers (150, 250) which include a plurality of orifices.

5. An arrangement according to claim 4, characterized in that said means for transferring the electrolyte comprise firstly grooves (141 to 146, 241 to 246) provided in each washer in communication with said channels, and secondly a peripheral channel (127) provided in every other cell and in communication firstly with the channels in its own cell and secondly via orifices (131 to 136) with the channels in the adjacent cell.

6. An arrangement in according to anyone of claims 1 to 3, characterized in that said injection manifolds are defined by stacking together a set of central coaxial washers (550) including a plurality of orifices (501, 509), and that said collector manifolds are defined by stacking together a set of peripheral coaxial washers (560) including a plurality of orifices (561, 563).

7. An arrangement according to claim 6, characterized in that said central washers have grooves (541 to 546) putting the injection orifices into communication with the channels (521, 526) provided in said electrodes (500).

8. An arrangement according to anyone of the claims 6 and 7, characterized in that said peripheral washers (560) have peripheral connection channels (571 to 576) putting their orifices into communication with the channels provided in said electrodes (500).

9. An arrangement according to anyone of the preceding claims, characterized in that the channels provided in the electrode of a couple being radial, they are angularly offset relative to the channels provided in the electrode of the preceding couple and the electrode of the following couple.

**Patentansprüche**

1. Wärmetauschereinrichtung für eine aktivierbare Batterie mit einem Voltasäulenstapel in einem Isoliergehäuse, wobei jedes Element des Stapels eine poröse Kathode, einen Separator, eine Lithiumanode und eine Metallkathode aufweist, die als übereinandergeschichtete flache Bauteile ausgebildet sind, deren Dicke einige Zehntelmillimeter oder weniger beträgt, dadurch gekennzeichnet, daß die Einrichtung einen Zwangsumlaufkreis für den Elektrolyten besitzt, der folgende Komponenten aufweist:
 - Einspeiseschächte (25) und Sammelschächte (26) für den Elektrolyten,
 - Mittel zur Beförderung des Elektrolyten auf dem Weg von den Einspeiseschächten zu den Sammlern durch jedes Element (11, 12, 13, 14) hindurch, wobei die Elemente innerhalb der Masse mindestens einer Elektrode eingebrachte Kanäle besitzen, und
 - einer Pumpe (22) zum Umwälzen des Elektrolyten durch die Kanäle von den Einspeiseschächten bis zu den Sammelschächten, die nach außerhalb des Isoliergehäuses (5) münden.

2. Einrichtung nach Anspruch 1, dadurch gekennzeichnet, daß die Kanäle (121 bis 126, 221 bis 226) in die Kathoden (100, 200) der Elemente eingebracht sind.

3. Einrichtung nach einem der vorhergehenden Ansprüche, dadurch gekennzeichnet, daß die Querschnittfläche der Kanäle zwischen 5% und 20% der Elektrodenoberfläche beträgt.

4. Einrichtung nach einem der vorhergehenden Ansprüche, dadurch gekennzeichnet, daß die Einspeiseschächte und die Sammelschächte durch das Stapeln einer Gesamtheit zentraler koaxialer Ringscheiben (150, 250) definiert sind, die eine Vielzahl von Öffnungen aufweisen.

5. Einrichtung nach Anspruch 4, dadurch gekennzeichnet, daß die Mittel zur Beförderung des Elektrolyten zum einen Nuten (141 bis 146, 241 bis 246), die in jede Ringscheibe eingearbeitet sind und mit den Kanälen in Verbindung stehen, und zum anderen einen peripheren Kanal (127) aufweisen, der bei jedem zweiten Element vorgesehen ist und einerseits direkt mit dessen eigenen Kanälen, andererseits über Öffnungen (131 bis 136) mit den Kanälen des benachbarten Elementes in Verbindung steht.

6. Einrichtung nach einem der Ansprüche 1 bis 3, dadurch gekennzeichnet, daß die Einspeiseschächte durch das Stapeln einer Gesamtheit zentraler, koaxialer Ringscheiben (550) mit einer Vielzahl von Öffnungen (501, 509) definiert sind, und daß die Sammelschächte durch das Stapeln einer Gesamtheit peripherer, koaxialer Ringscheiben (560) mit einer Vielzahl von Öffnungen (561, 563) definiert sind.

7. Einrichtung nach Anspruch 6, dadurch gekennzeichnet, daß die zentralen Ringscheiben Nuten (541 bis 546) aufweisen, die ihre Einspeiseöffnungen mit den in die Elektroden (500) eingearbeiteten Kanälen (521, 526) verbinden.

8. Einrichtung nach einem der Ansprüche 6 bis 7, dadurch gekennzeichnet, daß die peripheren Ringscheiben (560) periphere Anschlußkanäle (571 bis 576) zur Verbindung ihrer Öffnungen mit den in die Elektroden (500) eingearbeiteten Kanälen aufweisen.

9. Einrichtung nach einem der vorhergehenden Ansprüche, dadurch gekennzeichnet, daß die in die Elektrode eines Elektrodenpaars eingearbeiteten Kanäle mit radialem Verlauf winkelmäßig gegenüber den Kanälen der Elektrode des vorhergehenden Elektrodenpaars sowie den Kanälen der Elektrode des nachfolgenden Elektrodenpaars versetzt sind.

# FIG.1

EP 0 230 901 B1

# FIG.2

EP 0 230 901 B1

# FIG.3

FIG.4

FIG.5

FIG.6

FIG.7

FIG.8

EP 0 230 901 B1

FIG.9

FIG.10